# DEMANDE DE BREVET EUROPEEN

(11) **EP 1 810 908 A1**
(43) Date de publication de la demande: **25.07.2007**
(21) Numéro de dépôt: 07290077.2
(22) Date de dépôt: 22.01.2007
(51) Int. Cl.: B62B 3/06, B66F 9/065

(54) **Engin de manutention**

(30) Priorité: 23.01.2006 FR 0600591
(71) Demandeur: Modules Associes, 71130 Vendenesse sur Arroux (FR)
(72) Inventeur: Bernigaud, Jean-Paul, 71230 Saint Vallier (FR)
(74) Mandataire: Lamoureux, Bernard

(57) **Abrégé**

Engin de manutention de charges Présentant indifféremment les fonctions de transpalette et de gerbeur.

L'engin (1) comprend un corps (50), des moyens de déplacement (13,14), un timon de manoeuvre (16), des accumulateurs d'énergie (90), un dispositif de levage de charges (30) qui comporte :
- un porte-outils (40) agencé pour recevoir différents outils supports de charges (41,41'),
- un ensemble de deux bras supérieur (32) et inférieur (31) montés de manière pivotante,
- au moins un vérin d'élévation de charges (33) articulé en une extrémité sur le corps (50) par l'intermédiaire d'un axe (54) et en l'autre extrémité sur le bras supérieur (32) par l'intermédiaire d'un autre axe (55), les axes (54,55) du vérin d'élévation de charges (33) sont coaxiaux avec les axes d'articulation (52,56) des bras inférieur (31) et supérieur (32).

## Description

La présente invention concerne un engin de manutention de charges, telles que des matériaux, comprenant un corps, des moyens de déplacement, un timon de manoeuvre, et des accumulateurs d'énergie.

L'invention concerne en particulier un engin du type spécifié qui convient à la manutention de charges présentées en petits conteneurs, habituellement dans les laboratoires des collectivités comme les cuisines, lingeries, réserves, les entrepôts, les grands magasins ou dans d'autres situations dans lesquelles les charges transportées doivent être déposées dans des coffres de fourgonnettes pour acheminement vers les lieux d'utilisation. Jusqu'à présent, on trouve deux types de véhicules :
- un véhicule du type gerbeur, comprenant un dispositif de mât vertical, placé à l'avant de l'engin et devant le pupitre de commande, et un accessoire de manutention. Dans de tels engins, la visibilité du conducteur vers l'avant est réduite par la structure du mât vertical et ce mât en position repliée occupe une hauteur considérable et peut interdire l'accès des laboratoires ayant des aires peu dégagées en hauteur, des fourgonnettes ayant un haillon ouvrant sur le dessus et l'accès sous les machines lors d'opérations de maintenance,
- un engin de type transpalette ou plate-forme relevable qui permet d'élever la charge, de la déplacer vers le lieu d'utilisation, mais du fait de sa structure, ne permet pas une dépose de la charge dans le coffre d'une fourgonnette. Le brevet japonais JP 51081351 décrit un engin de ce type.

L'invention a donc pour objet la réalisation d'un engin de manutention de charges ne présentant pas les inconvénients précités et assurant indifféremment les fonctions de gerbeur et de transpalette.

A cet effet, et conformément à la présente invention, il est proposé un engin de manutention de charges du type spécifié comprenant un corps, des moyens de déplacement, un timon de manoeuvre, et des accumulateurs d'énergie, remarquable en ce que l'engin de manutention comporte également un dispositif de levage de charges qui comporte :
- un porte-outils agencé pour recevoir différents outils supports de charges,
- un ensemble de deux bras supérieur et inférieur montés chacun de manière pivotante en leurs extrémités arrières sur le corps de l'engin autour d'un axe d'articulation dans un plan parallèle au plan médian x-x' de l'engin, et en leurs extrémités avant sur le porte-outils autour d'un autre axe d'articulation et,
- au moins un vérin d'élévation de charges articulé en une extrémité sur le corps par l'intermédiaire d'un axe et en l'autre extrémité sur le bras supérieur par l'intermédiaire d'un autre axe, les axes du vérin d'élévation de charges sont coaxiaux avec les axes d'articulation des bras inférieur et supérieur.

Selon une variante de réalisation, l'engin comprend un dispositif de modification de l'inclinaison des outils dans le plan avant arrière.

L'engin selon l'invention permet de monter des outils supports de charges, tels qu'une fourche ou une potence, qui pourront prendre au sol un ensemble palette avec sa charge, le soulever, le déplacer et le déposer par exemple dans un coffre de camionnette, les moyens de déplacement à l'avant étant en contact avec le sol, sous la camionnette. On comprend donc bien que l'engin de manutention selon l'invention est du type transpalette-gerbeur, c'est-à-dire qu'il assure indifféremment ces deux fonctions.

L'engin selon l'invention est relativement étroit, la visibilité vers l'avant du conducteur n'étant pas réduite de manière superflue par des éléments de l'engin et permettant par exemple, la dépose aisée de charges dans les coffres des fourgonnettes et camionnettes, l'accès sous les machines lors des opérations de maintenance, et permettant des opérations de levage au crochet.

D'autres caractéristiques et avantages de l'invention seront mieux compris à la lecture de la description d'exemple de réalisation faite en référence avec les dessins annexés:
- la figure 1 est une vue en élévation latérale d'un engin de manutention de charges, avec outils supports de charges en position basse selon l'invention,
- la figure 2 est une vue en élévation latérale d'un engin de manutention de charges, avec outils supports de charges en position haute, selon l'invention,
- la figure 3 est une vue de dessus de l'engin selon l'invention,
- la figure 4 est une variante de l'engin selon l'invention avec un dispositif de correction d'assiette longitudinal,
- la figure 5 est une autre variante de l'engin selon l'invention permettant une grande inclinaison des outils supports de charges.

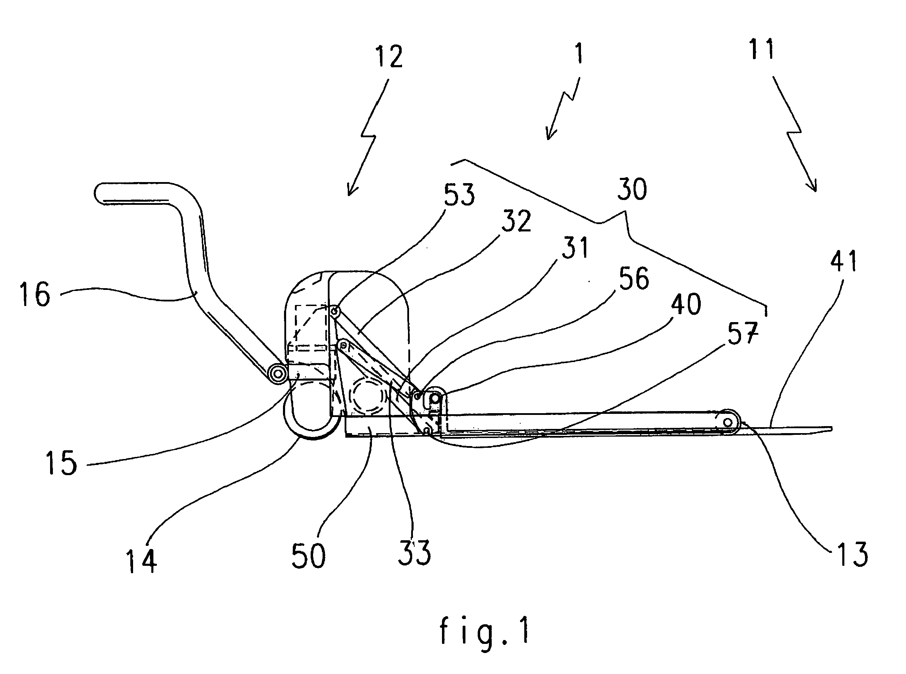

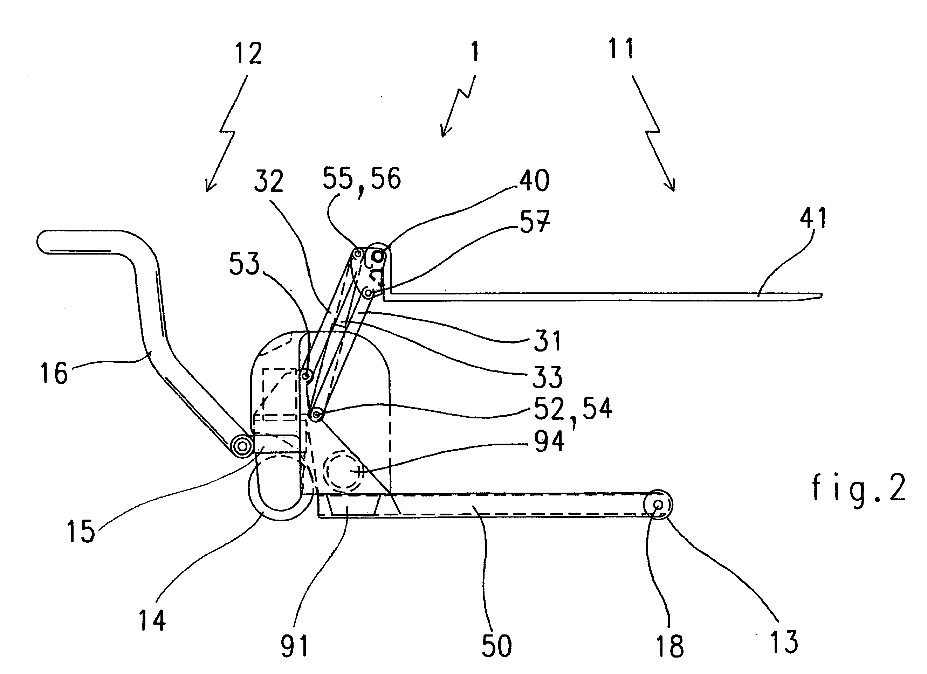

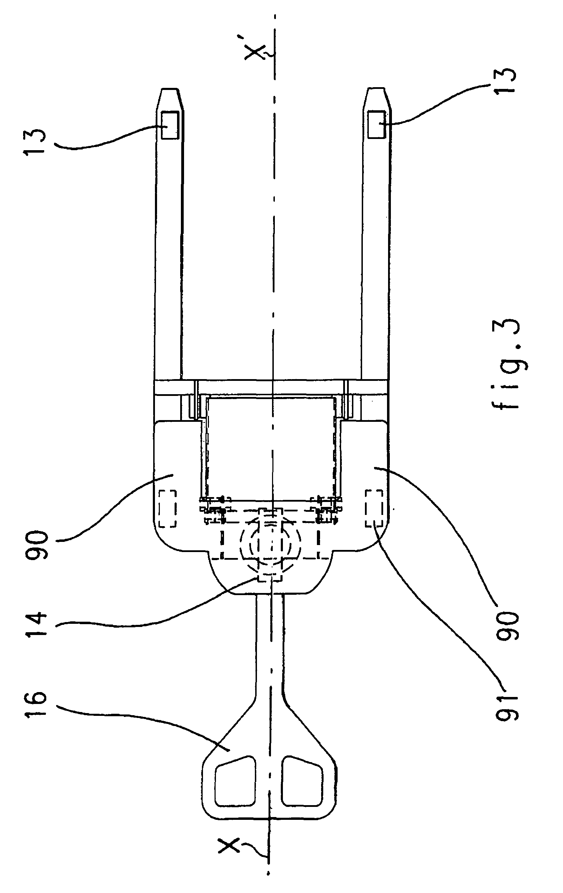

On se réfère aux figures 1 à 3 qui représentent un engin de manutention de charges de type transpalette gerbeur, portant la référence générale 1. L'engin de manutention de charges 1 possède un corps 50, une extrémité avant 11 et une extrémité arrière 12, des moyens de déplacement qui comprennent deux ensembles de roues avant 13 de contact avec le sol, placées dans la région d'extrémité avant 11 et opposées dans la direction de la largeur de l'engin, afin qu'elles se trouvent chacune d'un côté de l'engin 1. Les moyens de déplacement comprennent également une roue arrière 14 de contact avec le sol, placée dans la région d'extrémité arrière 12 de l'engin 1 et positionnée dans l'axe longitudinal de l'arrière 12.

La roue arrière 14 est motrice et directrice sur un ensemble pivot moteur 15 de réalisation classique monté sur le corps 50. Elle est directrice par l'intermédiaire d'un timon de manoeuvre manuelle 16 d'installation classique. Elle est entraînée par un groupe de puissance moteur et orientée par l'action d'un opérateur sur le timon de manoeuvre 16.

Il est bien évident qu'il est possible de prévoir deux roues arrières motrices et directrices disposées de part et d'autre de l'engin 1.

Les ensembles roues avant 13 sont non directrices et sont montées sur le corps 50 par l'intermédiaire d'axes 18 de rotation, et sont situées, dans le sens long, sous les outils supports de charges 41, le plus en avant possible. De ce fait, le centre de gravité de la charge transportée reste en permanence inscrit dans le triangle d'appui au sol formé par les roues avant 13 et arrière 14, lors de la manipulation de la charge. Les roues avant 13 sont de petites dimensions.

Sur le timon de manoeuvre 16 actionné par l'opérateur sont disposées les commandes de translation, et d'élévation de charges et les indicateurs et commande nécessaires à la conduite de l'engin 1.

L'engin 1 comprend un dispositif de levage de charges 30, placé dans la partie arrière 12 de l'engin 1 et comportant :
- un bras inférieur 31 monté de manière pivotante en une de ses extrémités sur le corps 50, autour d'un axe 52, placé dans la région arrière 12 de l'engin afin qu'il présente un mouvement de pivotement vertical dans un plan qui s'étend dans la direction avant-arrière de l'engin, parallèle au plan central x-x',
- un bras supérieur 32 monté de manière pivotante en une de ses extrémités sur le corps 50, autour d'un axe 53, placée dans la région arrière 12 de l'engin afin qu'il soit sensiblement parallèle au bras 31 pendant tout le débattement du vérin d'élévation de charges 33,
- un porte-outils 40 fixé en extrémité des bras inférieur 31 et supérieur 32 par l'intermédiaire des axes 57 et 56, pour être articulé sur l'ensemble des deux bras pivotants 31, 32 sur l'arrière du corps 50 dans un plan parallèle au plan médian x-x',
- un vérin d'élévation de charges 33, articulé en une extrémité par l'intermédiaire de l'axe 54 solidaire du corps 50 et en l'autre extrémité par l'intermédiaire de l'axe 55 solidaire du bras supérieur 32, animant le dispositif de levage 30 pour lever les charges vers le haut ou vers le bas dans un plan qui s'étend dans la direction avant-arrière de l'engin 1. Il est possible de prévoir deux vérins jumeaux d'élévation de charges.

Le porte-outil 40 comprend une barre transversale et un appui transversal permettant d'installer facilement différents outils supports de charges 41,41' (fourches, plateau, potence) et de les interchanger, avec possibilité de réglage de l'écartement en largeur des fourches.

Le positionnement judicieux des différents axes assure une assiette longitudinale constante du porte-outils 40 par rapport au corps 50, pendant tout le débattement du vérin d'élévation de charges 33. La position caractéristique est la coaxialité des axes 54 et 55 du vérin d'élévation de charges 33 avec les axes d'articulation 52 et 56 des bras inférieur 31 et supérieur 32 du dispositif de levage de la charge 30.

Le corps 50 comporte une ossature constituée par assemblage par soudage et assemblages boulonnés de tôles. Sur ce corps 50 sont soudées les fixations avec l'axe d'articulation 52 du bras inférieur 31, celles 53 du bras supérieur 32, la fixation avec l'axe d'articulation 54 du vérin 33, les supports du pivot moteur 15, et les articulations 18 des roues avant 13, ainsi que les fixations des composants nécessaires au fonctionnement et à la sécurité de ce type de l'engin.

De façon générale, les accumulateurs d'énergie électrique 90 seront placés de part et d'autre de la roue arrière directrice 14 en partie basse et arrière de l'engin. Sous les accumulateurs 90, au niveau arrière du corps 50, seront installées des butées ou des roulettes stabilisatrices 91, sécurisant l'engin lors de déplacement rapide sur des trajets sinueux. Un groupe de puissance hydraulique 94 fournissant l'énergie au vérin 33 pourra être installé sur le corps 50. Un timon de manoeuvre 16 recevra les commandes et les témoins de contrôle.

Selon une variante de réalisation, l'engin selon l'invention comprend un dispositif de modification de l'inclinaison des outils supports de charges dans le plan avant arrière. D'une manière avantageuse, ce dispositif de modification de l'inclinaison comprend un vérin hydraulique prévu sur le bras inférieur 31.

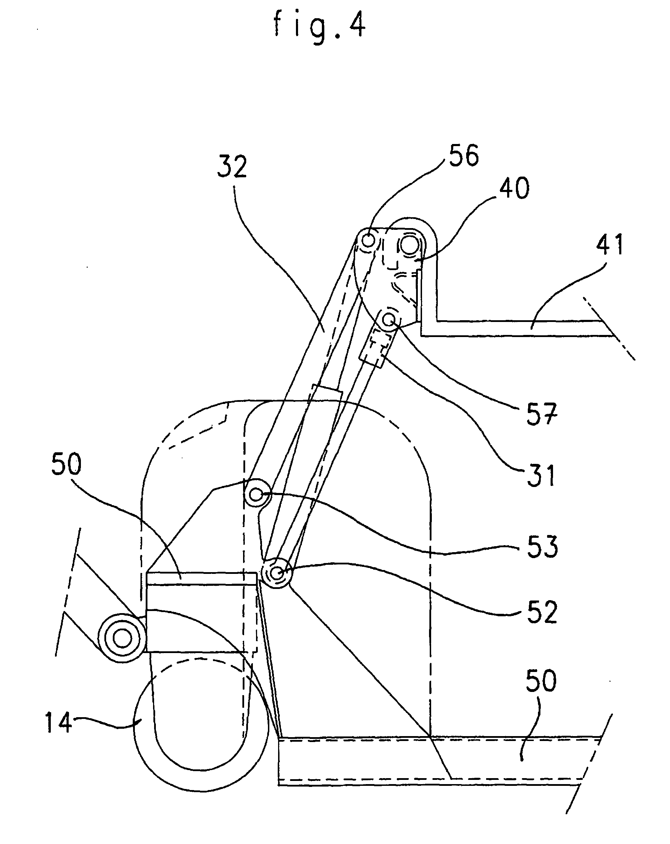

La figure 4 décrit une variante de l'engin précédent comprenant le dispositif de modification de l'inclinaison des outils supports de charges qui forme en particulier un dispositif de correction d'assiette longitudinale par rapport au corps 50. Pour former ce dispositif de correction d'assiette, le vérin hydraulique est réglé pour avoir une faible course (inférieur à 50mm) de sorte qu'une modification de faible amplitude de la longueur du bras inférieur entraîne une correction d'assiette longitudinale des outils supports de charges 41 installés sur le porte-outil 40. La variation de longueur du bras 31 entraîne une rotation du porte-outils 40 autour de l'axe 56, donc une inclinaison des outils supports de charges dans le sens longitudinal de l'engin 1.

Pendant le levage de la charge, les outils supports de charges auront une légère modification d'assiette par rotation autour de l'axe 57, compatible avec une utilisation type chariot de manutention.

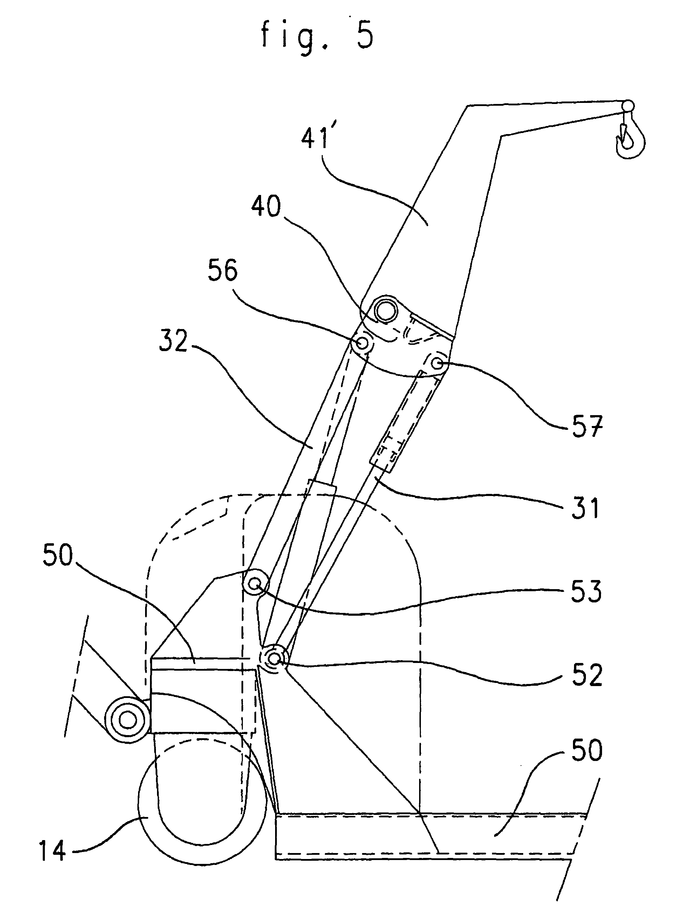

La figure 5 décrit une variante de l'engin précédent comprenant le dispositif de modification de l'inclinaison des outils supports de charges qui constitue en particulier un dispositif de levage de type potence. Pour ce faire, le vérin hydraulique est réglé pour avoir une course importante (supérieure à 200 mm). L'augmentation de grande amplitude de la longueur du bras inférieur 31 entraîne une rotation du porte-outils, donc une inclinaison des outils supports de charges 41'. Par conséquent, cette inclinaison par rapport au corps 50 sera supérieure à 45°, dans le sens longitudinal de l'engin. L'installation d'un outil adapté sur le porte-outils permet de faire du levage de type potence ou mini-grue et permet d'atteindre une hauteur de levage importante en extrémité d'outils supports de charges (utilisation en potence par exemple).

L'engin selon l'invention est compact et peut par exemple avoir une largeur de 750 mm, une hauteur avec les outils en position basse de 800 mm et lever des charges jusqu'à une hauteur de 1100 mm.

L'ensemble du dispositif de stockage d'énergie pourra être remplacé par un groupe de puissance thermique ou électrique alimentant les dispositifs de translation et de levage de charge par des transmissions hydrauliques.

Avec un outil support de charges du type potence, et le dispositif de grande inclinaison des outils, il sera possible d'amener le crochet de reprise de charge du sol à une hauteur de 2 mètres.

Le porte-outils peut recevoir différents outils supports de charge (fourche, potence, plateau, benne...) et sa conception permettra de déposer et reprendre rapidement différents outils supports de charge en toute position.

Ainsi la présente réalisation permet d'atteindre l'objet précité par réalisation d'un engin peu encombrant dont la largeur peut être inférieure à 750 mm, la longueur de moins de 2200 mm et de hauteur de moins de 800 mm. Ce résultat est obtenu par la disposition du dispositif de levage de charge en arrière de l'outil support de charges, de la roue arrière sous le dispositif de levage de charges, des roues avant de contact avec le sol situées dans la projection de la partie avant de l'outil support de charges.

## Revendications

1. - Engin (1) de manutention de charges de type transpalette-gerbeur, c'est-à-dire assurant les fonctions de transpalette ou plate-forme relevable et de gerbeur, comprenant un corps (50), des moyens de déplacement (13, 14), un timon de manoeuvre (16), des accumulateurs d'énergie (90), **caractérisé en ce que** ledit engin comprend également un dispositif de levage de charges (30) qui comporte :
- un porte-outils (40) agencé pour recevoir différents outils supports de charges (41, 41'),
- un ensemble de deux bras supérieur (32) et inférieur (31) montés de manière pivotante en leurs extrémités arrières sur le corps (50) de l'engin (1) respectivement autour d'un axe d'articulation (53) et (52) dans un plan parallèle au plan médian x-x' de l'engin, et en leurs extrémités avant sur le porte-outils (40) respectivement autour d'un axe d'articulation (56) et (57), et
- au moins un vérin d'élévation de charges (33) articulé en une extrémité sur le corps (50) par l'intermédiaire d'un axe (54) et en l'autre extrémité sur le bras supérieur (32) par l'intermédiaire d'un autre axe (55), les axes (54, 55) du vérin d'élévation de charges (33) sont coaxiaux avec les axes d'articulation (52, 56) des bras inférieur (31) et supérieur (32).

2. - Engin selon l'une quelconque des revendications précédentes, **caractérisé en ce qu'**il comprend un dispositif de modification de l'inclinaison des outils supports de charges.

3. - Engin selon la revendication 2, **caractérisé en ce que** le dispositif de modification de l'inclinaison des outils supports de charges comprend un vérin hydraulique prévu sur le bras inférieur (31).

4. - Engin selon la revendication 3, **caractérisé en ce que** le vérin hydraulique est réglé pour avoir une faible course de manière à former un dispositif de correction d'assiette du porte-outil de sorte qu'une modification de faible amplitude de la longueur du bras inférieur (31) entraîne une correction d'assiette longitudinale des outils supports de charges (41) installés sur le porte-outils (40).

5. - Engin selon la revendication 3, **caractérisé en ce que** le vérin hydraulique est réglé pour avoir une course importante de sorte qu'une augmentation de grande amplitude de la longueur du bras inférieur (31) entraîne une inclinaison des outils supports de charges (41') supérieure à 45° par rapport au corps 50.

6. - Engin selon l'une quelconque des revendications précédentes, **caractérisé en ce que** le porte-outils (40) comprend une barre transversale et un appui transversal adaptés pour recevoir les différents outils supports de charges (41, 41').

7. - Engin selon l'une quelconque des revendications précédentes, **caractérisé en ce que** les moyens de déplacement comprennent deux ensembles de roues avant (13) non directrices.

8. - Engin selon l'une quelconque des revendications précédentes, **caractérisé en ce que** les moyens de déplacement comprennent au moins une roue arrière (14) motrice et directrice à l'aide d'un pivot moteur (15).
